# EUROPÄISCHE PATENTSCHRIFT

(11) **EP 3 094 951 B1**
(45) Veröffentlichungstag und Bekanntmachung des Hinweises auf die Patenterteilung: **28.10.2020**
(21) Anmeldenummer: 14798881.0
(22) Anmeldetag: 14.11.2014
(51) Int. Cl.: G01L 9/00, G01L 9/12

(54) **KAPAZITIVE DRUCKMESSZELLE MIT MINDESTENS EINEM TEMPERATURSENSOR UND DRUCKMESSVERFAHREN**
CAPACITIVE PRESSURE-MEASURING CELL HAVING AT LEAST ONE TEMPERATURE SENSOR AND PRESSURE MEASUREMENT METHOD
CELLULE DE MESURE DE PRESSION CAPACITIVE POURVUE D'UN CAPTEUR DE TEMPÉRATURE ET PROCÉDÉ DE MESURE DE PRESSION

(30) Priorität: 20.12.2013 DE 102013114734
(43) Veröffentlichungstag der Anmeldung: 23.11.2016
(73) Patentinhaber: Endress+Hauser SE+Co. KG, 79689 Maulburg (DE)
(72) Erfinder: BURGARD, Martin, 79650 Schopfheim (DE); DREWES, Ulfert, 79379 Müllheim (DE); PONATH, Nils, 79539 Lörrach (DE); ROSSBERG, Andreas, 79713 Bad Säckingen (DE); UEHLIN, Thomas, 79650 Schopfheim (DE)
(74) Vertreter: Andres, Angelika Maria
(86) Internationale Anmeldenummer: PCT/EP2014/074656
(87) Internationale Veröffentlichungsnummer: WO 2015/090771

(56) Entgegenhaltungen:
- EP-A1- 2 520 917
- EP-A1- 2 520 917
- EP-A2- 1 174 696
- EP-A2- 1 174 696
- DE-A1-102005 008 959
- DE-A1-102009 002 662
- DE-A1-102009 002 662
- US-A1- 2011 308 320
- US-A1- 2011 308 320

## Beschreibung

Die vorliegende Erfindung betrifft eine kapazitive Druckmesszelle mit einem Gegenkörper, einer mit dem Gegenkörper verbunden, durch einen zu messenden Druck verformbaren Messmembran, und mit mindestens einem Temperatursensor.

Temperatursensoren sind häufig in Druckmesszellen integriert, um den statischen Temperaturfehler bei der Druckmessung zu kompensieren. Bei gattungsgemäßen Druckmesszellen ist dieser Temperatursensor meistens auf der Rückseite der Keramik angeordnet, er kann aber auch in einer anschließenden Auswerteelektronik enthalten sein. Wenn sich eine Druckmesszelle in thermischem Gleichgewicht mit ihrer Umgebung befindet, kann die Temperaturabhängigkeit der Druckmessung mit Hilfe eines solchen Temperatursensors und einer geeigneten Aufbereitung des Messsignals gut kompensiert werden. Temperatursprünge können jedoch zu erheblichen Messfehlern führen, die mit den bekannten Verfahren kaum zu kompensieren sind. Insbesondere bei keramischen Druckmesszellen mit einer dünnen Messmembran mit einer Stärke von beispielsweise wenigen 100 µm, bei einer medienberührenden Oberfläche von etwa 1 cm² bis 10 cm² folgt die Temperatur der Messmembran beliebig schnell der Temperatur eines an der Messmembran anstehenden Mediums, während der Wärmeübertrag zwischen der Rückseite des Gegenkörpers und der Messmembran nur sehr langsam verläuft, nämlich durch ein ringförmig umlaufende Fügestelle zwischen Gegenkörper und Fügestelle am äußeren Rand der Messmembran und dann durch das Volumen des Gegenkörpers zu dessen Rückseite. Damit erfolgt eine Temperaturmessung an der Rückseite des Grundkörpers im Zweifel immer verzögert.

Die Veröffentlichung EP 01174696 A2 offenbart einen keramischen Drucksensor mit einer Messmembran und einem Gegenkörper, die durch eine Fügestelle aus einem Glaslot miteinander verbunden sind. Der Drucksensor umfasst einen kapazitiven Messwandler mit einer Elektrode an der Messmembran und zwei Gegenelektroden am Gegenkörper. Zusätzlich umfasst der Drucksensor einen Temperatursensor der an der Oberfläche des Gegenkörpers angeordnet und in die Fügestelle eingebettet ist.

Die Offenlegungsschrift DE 10 2009 002 662 A1 offenbart einen kapazitiven drucksensor mit einer Messmembran und einem Gegenkörper, die durch eine Fügestelle aus einem Glaslot miteinander verbunden sind. Der Drucksensor umfasst einen kapazitiven Messwandler mit einer Elektrode an der Messmembran und zwei Gegenelektroden am Gegenkörper. Weiterhin ist in einem Ausführungsbeispiel zentral an der Messmembran ein mehrlagiger Temperatursensor angeordnet, der einer Aussparung in der Gegenelektrode gegenüberliegt. In einem anderen Ausführungsbeispiel ist im Randbereich der Messmembran ein Temperatursensor 8 angeordnet, der einer Aussparung in einer Gegenkörperelektrode gegenüberliegt. Die Offenlegungsschrift DE102005008959 A1 offenbart einen weiteren Drucksensor nach dem Stand der Technik.

Die Offenlegungsschrift DE 100 44 078 A1 offenbart eine Druckmesszelle mit zwei Temperatursensoren, die in Richtung erwarteten Temperaturgradienten beabstandet anzuordnen sind. Deshalb ist der erste Temperatursensor an der die Vorderseite der Druckmesszelle bildenden Messmembran, wo er Temperaturänderungen des Mediums schnell zu folgen vermag, und der zweite ist an der von der Messmembran abgewandten Rückseite des Gegenkörpers der Druckmesszelle angeordnet. Der erste Temperatursensor ist an der Frontseite des Gegenkörpers angeordnet, in die Fügestelle eingebettet und über elektrische Durchführungen durch den Grundkörper kontaktiert.

Ein Vergleich der Temperatursignale der beiden Temperatursensoren ermöglicht dann die Detektion eines Temperaturgradienten und eine genauere Kompensation der durch den Temperaturgradienten bedingten Effekte, wie eine Wölbung von Messmembran und/oder Gegenkörper, oder veränderte Steifigkeiten. Die genannte Offenlegungsschrift erwähnt weiterhin, dass die Feststellung von Temperaturgradienten anhand der zeitlichen Ableitung des Signals vom ersten Temperatursensor erfolgen kann.

Wie Eingangs erwähnt, stellt jedoch gerade die Fügestelle zwischen Messmembran und Gegenkörper einen großen thermischen Widerstand dar, so dass ein zusätzlicher Temperatursensor an der Frontseite des Gegenkörpers zwar einerseits eine deutliche Verbesserung gegenüber dem Stand der Technik ist, andererseits steht dieser Temperatursensor aber auch unter dem thermischen Einfluss des Volumens des Gegenkörpers, so dass bei schnellen Temperatursprüngen, noch eine Verfälschung zu erwarten ist. Wenn im Bereich der Fügestelle ein Dichtring auf die Frontseite der Messmembran einwirkt, kann dieser ebenfalls den Temperaturmesswert des ersten Temperatursensors beeinflussen, was die Temperaturkompensation beeinträchtigen kann.

Es ist daher die Aufgabe der vorliegenden Erfindung, eine Druckmesszelle und ein Betriebsverfahren dafür bereitzustellen, wobei die Druckmesszelle eine weiter verbesserte Temperaturkompensation aufweist.

Die Aufgabe wird erfindungsgemäß gelöst durch die Druckmesszelle gemäß dem unabhängigen Patentanspruch 1 und das Verfahren gemäß dem unabhängigen Patentanspruch 9.

Der erfindungsgemäße Drucksensor umfasst eine Betriebsschaltung; und eine Druckmesszelle mit einem Gegenkörper; einer an dem Gegenkörper angeordneten, durch einen zu messenden Druck verformbaren Messmembran; und einem kapazitiven Wandler welcher mindestens eine an der Messmembran angeordnete Membranelektrode und mindestens eine am Gegenkörper angeordnete Gegenkörperelektrode aufweist, wobei die Kapazität zwischen der Membranelektrode und der Gegenkörperelektrode von einer druckabhängigen Verformung der Messmembran abhängt, wobei zumindest die Membranelektrode eine temperaturabhängige Impedanz aufweist; wobei die Betriebsschaltung dazu eingerichtet, mindestens eine Kapazität zwischen der mindestens einen Gegenkörperelektrode und der mindestens einen Membranelektrode zu erfassen, und in Abhängigkeit von der mindestens einen Kapazität einen Druckmesswert bereitzustellen, sowie einen Impedanzwert der Membranelektrode, insbesondere den ohmschen Anteil der Impedanz der Membranelektrode, zu bestimmen.

Die Temperaturabhängigkeit der Impedanz ist insbesondere durch einen temperaturabhängigen ohmschen Widerstand des Materials der Membranelektrode gegeben.

In einer Weiterbildung der Erfindung ist die Betriebsschaltung dazu eingerichtet, in Abhängigkeit von dem Impedanzwert der Membranelektrode einen Temperaturwert für die Messmembran zu bestimmen.

In einer Weiterbildung der Erfindung ist die Betriebsschaltung dazu eingerichtet, in Abhängigkeit von der Impedanz der Membranelektrode, eine Temperaturkompensation und/oder Temperaturgradientenkompensation durchzuführen um einen kompensierten Druckmesswert bereitzustellen.

Der erfindungsgemäße Drucksensor ermöglicht eine Bestimmung der Temperatur der Messmembran, die im Wesentlichen durch die gesamte Fläche der Messmembran beeinflusst ist und nicht nur durch den Randbereich, in dem die Messmembran mit anderen Wärmequellen oder Wärmesenken gekoppelt ist, welche die Temperaturmessung verfälschen, und damit eine ungenügende Basis für eine Temperaturkompensation geben.

Zudem benötigt der erfindungsgemäße Drucksensor - anders als im Stand der Technik - keine zusätzlichen Anschlüsse bzw. Durchführungen durch den Gegenkörper um eine Temperatur der Messmembran zu bestimmen. Damit ist Bestimmung der Membrantemperatur in konstruktiver Hinsicht kostenneutral.

In einer Weiterbildung der Erfindung ist die Betriebsschaltung dazu eingerichtet, die Impedanz der Membranelektrode anhand einer Zeitkonstanten eines Lade- und/oder Entladevorgangs der Kapazität zwischen der Membranelektrode und der mindestens einen Gegenkörperelektrode zu bestimmen.

In einer Weiterbildung der Erfindung bildet die Betriebsschaltung zusammen mit der Kapazität zwischen der Membranelektrode und der mindestens einen Gegenkörperelektrode einen Schwingkreis, wobei die Betriebsschaltung dazu eingerichtet ist, die Impedanz der Membranelektrode anhand einer charakteristischen Größe des Schwingkreises zu bestimmen, beispielsweise anhand eines Phasenwinkels zwischen einer Ladespannung und einem Ladestrom in dem Schwingkreis, oder anhand der Güte bzw. der Dämpfung des Schwingkreises.

In einer Weiterbildung der Erfindung hängt die Impedanz der Membranelektrode außer von der Temperatur auch von einer Verformung der Messmembran ab, wobei die Betriebsschaltung dazu eingerichtet ist, in Abhängigkeit von der mindestens einen Kapazität zwischen der Membranelektrode und der mindestens einen Gegenkörperelektrode den Verformungseinfluss auf die Impedanz der Membranelektrode zu ermitteln, und bei der Ermittlung eines Temperaturwerts der Messmembran zu kompensieren, wobei der solchermaßen ermittelte Temperaturwert zur Durchführung einer Temperaturkompensation und/oder Temperaturgradientenkompensation bei der Bestimmung des Druckmesswerts heranzuziehen ist.

In einer Weiterbildung der Erfindung weist die Membranelektrode einen Halbleiter auf, insbesondere ein Metalloxid, insbesondere ein Titanoxid.

In einer Weiterbildung der Erfindung umfasst der Drucksensor weiterhin einen zweiten Temperatursensor, welcher auf einer der Messmembran abgewandten Rückseite des Gegenkörpers angeordnet ist, wobei die Betriebsschaltung dazu eingerichtet ist, eine Temperaturkompensation bzw. Temperaturgradientenkompenstion in Abhängigkeit von einer anhand der Impedanz der Messmembran ermittelten Temperatur der Messmembran und anhand eines Temperaturmesswerts des zweiten Temperatursensors durchzuführen.

In einer Weiterbildung der Erfindung ist die Messmembran mit dem Gegenkörper mittels einer umlaufenden elektrisch leitenden Fügestelle druckdicht gefügt, wobei die Fügestelle insbesondere ein Aktivhartlot aufweist, und wobei die Membranelektrode elektrisch leitend mit der Fügestelle verbunden ist.

In einer Weiterbildung der Erfindung weist der kapazitive Wandler einen Differentialkondensator mit einer ersten Gegenkörperelektrode und einer zweiten Gegenkörperelektrode auf, wobei die erste Gegenkörperelektrode von der zweiten Gegenkörperelektrode ringförmig umgeben ist, und wobei eine erste Kapazität zwischen der ersten Gegenkörperelektrode und der Membranelektrode gleich einer zweiten Kapazität zwischen der zweiten Gegenkörperelektrode und der Membranelektrode ist, wenn sich die Messmembran und der Gegenkörper in ihrer Ruhelage befinden.

Das erfindungsgemäße Verfahren zum Ermitteln eines Druckmesswerts mittels eines Drucksensors, insbesondere mittels eines Drucksensors nach einem der vorhergehenden Ansprüche, welcher Drucksensor einen kapazitiven Wandler zum Wandeln einer druckabhängigen Verformung einer Messmembran in ein elektrisches Signal aufweist, wobei der Drucksensor Querempfindlichkeiten zur Temperatur der Messmembran und/oder zu Temperaturgradienten zwischen der Messmembran und weiteren Komponenten des Drucksensors aufweist, wobei der kapazitive Wandler eine Membranelektrode mit temperaturabhängiger Impedanz aufweist, ist ein Verfahren, welches die folgende Schritte aufweist: Ermitteln eines verformungsabhängigen Kapazitätsmesswerts des kapazitiven Wandlers; Ermitteln eines temperaturabhängigen Impedanzmesswerts der Membranelektrode; und Bestimmen eines temperaturkompensierten und/oder temperaturgradientenkompensierten Druckmesswertes in Abhängigkeit von dem Kapazitätsmesswert und dem Impedanzmesswert.
Die Erfindung wird nun anhand der in den Zeichnungen dargestellten Ausführungsbeispiele näher erläutert. Es zeigt:
- Figur 1:: einen Längsschnitt durch ein Ausführungsbeispiel einer erfindungsgemäßen Druckmesszelle;
- Fig. 2:: ein Diagramm, welches den Verlustwinkel tan(Delta als Funktion für verschiedene Temperaturen über den Druck darstellt; und
- 3.: ein Diagramm, welches Entladekurven eines Kondensators für verschiedene Elektrodentemperaturen darstellt.

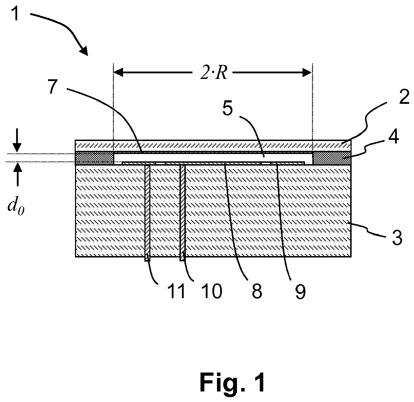

Die in Fig. 1 dargestellte Druckmesszelle 1 umfasst eine kreisscheibenförmige, keramische Messmembran 2, die mit einem erheblich steiferen kreisplattenförmigen, keramischen Gegenkörper 3 entlang einer umlaufenden Fügestelle 4 unter Bildung einer Messkammer 5 zwischen dem Gegenkörper 3 und der Messmembran 2 druckdicht gefügt ist. Die Messmembran und der Gegenkörper können insbesondere Korund aufweisen. Die Fügestelle kann insbesondere ein Aktivhartlot, beispielsweise ein Zr-Ni-Ti-Aktivhartlot, aufweisen.

Die Messmembran 2 weist auf ihrer gegenkörperseitigen Oberfläche eine vollflächige Membranelektrode 7 auf, die ein Metalloxid, insbesondere ein dotiertes Metalloxid, beispielsweise mit Nb oder W dotiertes Titanoxid umfasst, wobei die Elektrode einen Durchmesser von 2 R aufweist, wobei R der Radius des auslenkbaren Bereichs der Messmembran ist, der dem Innenradius der Fügestelle entspricht. Auf der messmembranseitigen Oberfläche des Gegenkörpers ist eine zentrale, kreisflächenförmige Messelektrode 8 angeordnet, die von einer bezüglich der Membranelektrode 7 in der Ruhelage der Messmembran 2 im wesentlichen kapazitätsgleichen kreisringförmigen Referenzelektrode 9 kontakiert ist. Der Abstand der Referenzelektrode 9 zur Messelektrode 8 und zur Fügestelle 4 beträgt jeweils etwa 0,1 R. Die Referenzelektrode 9 und die Messelektrode 8 sind über metallische Durchführungen 10, 11 durch den Grundkörper elektrisch kontaktiert. Die Membranelektrode 7 kann beispielsweise über die Fügestelle auf Schaltungsmasse gelegt sein.
Zum Bestimmen eines Druckmesswerts werden die Kapazitäten zwischen der Messelektrode 8 und der Membranelektrode 7 einerseits, sowie der Referenzelektrode 9 und der Membranelektrode 7 andererseits erfasst. Die Bestimmung eines Druckmesswerts anhand dieser Kapazitäten ist an sich bekannt und beispielsweise der Offenlegungsschrift DE 10 2011 078 557 A1 beschrieben.

Das Elektrodenmaterial der Membranelektrode 7 weist einen temperaturabhängigen Widerstand auf, aus dem sich die Möglichkeit ergibt, die Temperatur der Messmembran 2 zu bestimmen, und auf dieser Basis eine Temperaturkompensation oder Temperaturgradienten Kompensation durchzuführen. Hierzu sind im folgenden verschiedene Ansätze beschrieben.

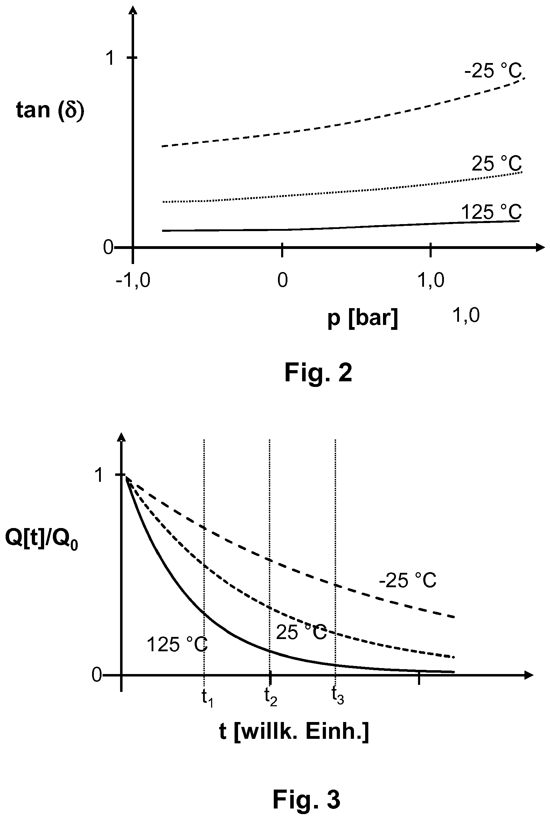

Prinzipiell können die Kapazitäten zwischen den Gegenkörperelektrode und der Membranelektrode der Druckmesszelle als Kapazitäten eines schwingt Kreises betrachtet werden, wobei sich die ohmschen Widerstände in einem solchen Schwingkreis anhand des Tangens des Verlustwinkels tan(δ) bestimmen lassen, wobei der Verlustwinkel δ der Differenz zwischen 90° und dem Phasenwinkel ϕ zwischen Strom und Spannung entspricht. Der bestimmende ohmsche Widerstand ist bei der Druckmesszelle des erfindungsgemäßen Drucksensors durch die Membranelektrode 7 gegeben und beträgt über einen typischen Temperatureinsatzbereich, je nach Dotierung, zwischen beispielsweise zwischen 1 und 8 kQ. Wie in Fig. 2 dargestellt, weisen die Werte für den Tangens des Verlustwinkels eine gut messbare Temperaturabhängigkeit auf, so dass nach einer Bestimmung des Verlustwinkels, dessen Druckabhängigkeit noch anhand der gemessenen Kapazitäten zu korrigieren ist, die Temperatur der Messmembranen 2 hinreichend genau bestimmt werden kann, um damit eine Temperaturkompensation durchzuführen. Zur Bestimmung des Verlustwinkels ist ein Schwingkreis, welcher die Messkapazität enthält vorzugsweise auf seiner Resonanzfrequenz zu betreiben, die beispielsweise über einen Frequenzsuchlauf mit einer gegebenen Erregerspannung zu identifizieren ist.

In der Praxis werden kapazitive Druckmesszellen häufig mit Ladungspumpen oder so genannten switched Capacitor-Schaltungen betrieben, bei denen beispielsweise ein Messkondensator, dessen Kapazität zu bestimmen ist mit einer definierten Spannung geladen wird, wobei anschließend der Messkondensator in einen Auswertungskondensator entladen wird, wobei die resultierende Spannung des Auswertungskondensators ein Maß für die gesuchte Kapazität ist. Dies gilt natürlich nur, wenn ausreichend Zeit für die Lade-und Entladevorgänge gelassen wird. Tatsächlich sind aktuelle Betriebsschaltungen so eingerichtet, dass sie den Kapazitäten hinreichend Zeit zum Laden und Entladen einräumen, was bei kleinen Kapazitäten oft nicht mehr als wenige Mikrosekunden oder selber weniger als 1 µs erfordert.

Wie nun in Fig. 3 dargestellt, wirkt sich der temperaturabhängige Widerstand der Membranelektrode auch auf die Entladezeit eines Kondensators aus, welche die Membranelektrode enthält. Damit ergibt sich die Möglichkeit, durch eine Folge von Lade-und Entladevorgängen, bei denen die Kapazitäten der Membranelektrode jeweils aufgeladen und über unterschiedliche Zeiten t₁, t₂ und t₃ entladen wird, die Zeitkonstante für die Einladung zu bestimmen und anhand dieser einen Temperaturwert für die Messmembranen zu ermitteln. Auf dieser Basis kann dann eine Temperaturkompensation oder Temperaturgradienten Kompensation bei der Ermittlung eines Druckmesswerts durchgeführt werden.

Für eine Temperaturkompensation kann einerseits nur ein Temperaturwert für die Temperatur der Messmembran verwendet werden, die anhand der soeben beschriebenen Verfahren bestimmt wurde, andererseits kann zusätzlich ein (in Fig. 1 nicht dargestellter) zweiter Temperatursensor verwendet werden, der auf der Rückseite des Gegenkörpers der Druckmesszelle angeordnet ist. Durch Vergleich der Temperaturwerte für die Messmembran und für die Rückseite des Gegenkörpers ist zudem einer Gradientenkompensation möglich. Ein wesentliches Indiz für einen Temperaturgradienten kann ebenfalls aus der zeitlichen Ableitung der Temperatur der Messmembranen gewonnen werden.

Die Betriebsschaltung kann insbesondere in Form eines ASIC realisiert sein, welcher auf der Rückseite der Druckmesszelle angeordnet ist. Weiterhin kann ein solcher ASIC nur eine Teilkomponente der Betriebsleitung sein, welche insbesondere mit einem Hauptprozessor kommuniziert, welcher von dem ASIC bereitgestellte Signale zur Durchführung einer Temperaturkompensation oder Temperaturgradienten Kompensation bei der Ermittlung eines Druckmesswerts auswertet.

## Patentansprüche

1. Drucksensor, umfassend:
eine Betriebsschaltung; und
eine Druckmesszelle mit einem Gegenkörper (1); einer an dem Gegenkörper (1) angeordneten, durch einen zu messenden Druck verformbaren Messmembran (2); und einem kapazitiven Wandler welcher mindestens eine an der Messmembran angeordnete Membranelektrode (7) und mindestens eine am Gegenkörper (2) angeordnete Gegenkörperelektrode (8, 9) aufweist, wobei die Kapazität zwischen der Membranelektrode (7) und der Gegenkörperelektrode (8, 9) von einer druckabhängigen Verformung der Messmembran abhängt, wobei zumindest die Membranelektrode (7) eine temperaturabhängige Impedanz aufweist;
wobei die Betriebsschaltung dazu eingerichtet ist, mindestens eine Kapazität zwischen der mindestens einen Gegenkörperelektrode und der mindestens einen Membranelektrode zu erfassen,
**dadurch gekennzeichnet, dass**
die Betriebsschaltung dazu eingerichtet ist, in Abhängigkeit von der mindestens einen Kapazität einen Druckmesswert bereitzustellen, sowie den ohmschen Anteil der Impedanz der Membranelektrode, zu bestimmen, und
wobei die Betriebsschaltung dazu eingerichtet ist, in Abhängigkeit von der Impedanz der Membranelektrode eine Temperaturkompensation und/oder Temperaturgradientenkompensation durchzuführen, um einen kompensierten Druckmesswert bereitzustellen.

2. Drucksensor nach Anspruch 1, wobei die Betriebsschaltung dazu eingerichtet ist, die Impedanz der Membranelektrode anhand einer Zeitkonstanten eines Lade- und/oder Entladevorgangs der Kapazität zwischen der Membranelektrode und der mindestens einen Gegenkörperelektrode zu bestimmen.

3. Drucksensor nach einem der vorhergehenden Ansprüche, wobei die Betriebsschaltung zusammen mit der Kapazität zwischen der Membranelektrode und der mindestens einen Gegenkörperelektrode einen Schwingkreis bildet, wobei die Betriebsschaltung dazu eingerichtet ist, die Impedanz der Membranelektrode anhand einer charakteristischen Größe des Schwingkreises zu bestimmen, beispielsweise anhand eines Phasenwinkels zwischen einer Ladespannung und einem Ladestrom in dem Schwingkreis, oder anhand der Güte bzw. der Dämpfung des Schwingkreises.

4. Drucksensor nach einem der vorhergehenden Ansprüche, wobei die Impedanz der Membranelektrode außer von der Temperatur auch von einer Verformung der Messmembran abhängt, wobei die Betriebsschaltung dazu eingerichtet ist, in Abhängigkeit von der mindestens einen Kapazität zwischen der Membranelektrode und der mindestens einen Gegenkörperelektrode den Verformungseinfluss auf die Impedanz der Membranelektrode zu ermitteln, und bei der Ermittlung eines Temperaturwerts der Messmembran zu kompensieren, wobei der solchermaßen ermittelte Temperaturwert zur Durchführung einer Temperaturkompensation und/oder Temperaturgradientenkompensation bei der Bestimmung des Druckmesswerts heranzuziehen ist.

5. Drucksensor nach einem der vorhergehenden Ansprüche, wobei die Membranelektrode einen Halbleiter aufweist, insbesondere ein Metalloxid, insbesondere ein Titanoxid oder dotiertes Titanoxid, beispielsweise mit Nb oder W dotiertes Titanoxid.

6. Drucksensor nach einem der vorhergehenden Ansprüche, weiterhin umfassend einen zweiten Temperatursensor, welcher auf einer der Messmembran abgewandten Rückseite des Gegenkörpers angeordnet ist, wobei die Betriebsschaltung dazu eingerichtet ist, eine Temperaturkompensation bzw. Temperaturgradientenkompenstion in Abhängigkeit von einer anhand der Impedanz der Messmembran ermittelten Temperatur der Messmembran und anhand eines Temperaturmesswerts des zweiten Temperatursensors durchzuführen.

7. Drucksensor nach einem der vorhergehenden Ansprüche wobei die Messmembran mit dem Gegenkörper mittels einer umlaufenden elektrisch leitenden Fügestelle druckdicht gefügt ist, wobei die Fügestelle insbesondere ein Aktivhartlot aufweist, und wobei die Membranelektrode elektrisch leitend mit der Fügestelle verbunden ist.

8. Drucksensor nach einem der vorhergehenden Ansprüche, wobei der kapazitive Wandler einen Differentialkondensator mit einer ersten Gegenkörperelektrode und einer zweiten Gegenkörperelektrode aufweist, wobei die erste Gegenkörperelektrode von der zweiten Gegenkörperelektrode ringförmig umgeben ist, und wobei eine erste Kapazität zwischen der ersten Gegenkörperelektrode und der Membranelektrode gleich einer zweiten Kapazität zwischen der zweiten Gegenkörperelektrode und der Membranelektrode ist, wenn sich die Messmembran und der Gegenkörper in ihrer Ruhelage befinden.

9. Verfahren zum Ermitteln eines Druckmesswerts mittels eines Drucksensors, insbesondere mittels eines Drucksensors nach einem der vorhergehenden Ansprüche, welcher Drucksensor einen kapazitiven Wandler zum Wandeln einer druckabhängigen Verformung einer Messmembran in ein elektrisches Signal aufweist, wobei der Drucksensor Querempfindlichkeiten zur Temperatur der Messmembran und/oder zu Temperaturgradienten zwischen der Messmembran und weiteren Komponenten des Drucksensors aufweist, wobei der kapazitive Wandler eine Membranelektrode mit temperaturabhängiger Impedanz aufweist, wobei das Verfahren folgende Schritte aufweist:
Ermitteln eines verformungsabhängigen Kapazitätsmesswerts des kapazitiven Wandlers;
**dadurch gekennzeichnet, dass** das Verfahren folgende weitere Schritte aufweist:
Ermitteln eines temperaturabhängigen ohmschen Anteils der Impedanz der Membranelektrode;
und Bestimmen eines temperaturkompensierten und/oder temperaturgradientenkompensierten Druckmesswertes in Abhängigkeit von dem Kapazitätsmesswert und dem ohmschen Anteil der Impedanz der Membranelektrode.

## Claims

1. Pressure sensor, comprising:
an operating circuit; and
a pressure measuring cell with a counter-body (1); a measuring diaphragm which is arranged on the counter-body (1) and can be deformed by a pressure to be measured; and a capacitive converter, which has at least one membrane electrode (7) arranged on the measuring diaphragm and at least one counter-body electrode (8, 9) arranged on the counter-body (2), wherein the capacity between the membrane electrode (7) and the counter-body electrode (8, 9) depends on a pressure-dependent deformation of the measuring membrane, wherein at least the membrane electrode (7) has a temperature-dependent impedance;
wherein the operating circuit is designed to measure at least a capacity between the at least one counter-body electrode and the at least one membrane electrode, **characterized in that** the operating circuit is designed to provide a pressure measured value as a function of the at least one capacity, and to determine the ohmic part of the impedance of the membrane electrode, and
wherein the operating circuit is designed to perform a temperature compensation or temperature gradient compensation, depending on the impedance of the membrane electrode, in order to provide a compensated pressure measured value.

2. Pressure sensor as claimed in Claim 1, wherein the operating circuit is designed to determine the impedance of the membrane electrode using a time constant of a charging and/or discharging process of the capacity between the membrane electrode and the at least one counter-body electrode.

3. Pressure sensor as claimed in one of the previous claims, wherein the operating circuit forms an oscillating circuit together with the capacity between the membrane electrode and the at least one counter-body electrode,
wherein the operating circuit is designed to determine the impedance of the membrane electrode using a characteristic variable of the oscillating circuit, for example using a phase angle between a charge voltage and a charge current in the oscillating circuit, or using the quality or attenuation of the oscillating circuit.

4. Pressure sensor as claimed in one of the previous claims, wherein the impedance of the membrane electrode also depends on the deformation of the measuring diaphragm - in addition to the temperature - wherein the operating circuit is configured to determine the deformation effect on the impedance of the membrane electrode as a function of the at least one capacity between the membrane electrode and the at least one counter-body electrode, and to perform a compensation when determining a temperature value of the measuring diaphragm, wherein the temperature value determined in this way is used to perform a temperature compensation and/or a temperature gradient compensation when determining the pressure measured value.

5. Pressure sensor as claimed in one of the previous claims, wherein the membrane electrode has a semi-conductor, particularly a metal oxide, particularly a titanium oxide or a doped titanium oxide, such as Nb-doped or W-doped titanium oxide.

6. Pressure sensor as claimed in one of the previous claims, further comprising a second temperature sensor, wherein the sensor is arranged on a rear side of the counter-body that is facing away from the measuring diaphragm, wherein the operating circuit is designed to perform a temperature compensation or a temperature gradient compensation as a function of the temperature of the measuring diaphragm determined using the impedance of the measuring diaphragm and using the temperature measured value of the second temperature sensor.

7. Pressure sensor as claimed in one of the previous claims, wherein the measuring diaphragm is joined in a pressure-tight manner with the counter-body by means of a circumferential electrically conductive joint, wherein the joint particularly features an active brazing solder, and wherein the membrane electrode is connected to the joint in an electrically conductive manner.

8. Pressure sensor as claimed in one of the previous claims, wherein the capacitive converter has a differential capacitor with a first counter-body electrode and a second counter-body electrode, wherein the first counter-body electrode is surrounded by the second counter-body electrode in an annular manner, and wherein a first capacity between the first counter-body electrode and the membrane electrode is equal to a second capacity between the second counter-body electrode and the membrane electrode when the measuring diaphragm and the counter-body are in their rest position.

9. Procedure to determine a pressure measured value using a pressure sensor, particularly using a pressure sensor as claimed in one of the previous claims, wherein said pressure sensor has a capacitive converter designed to convert a pressure-dependent deformation of a measuring diaphragm to an electric signal, wherein the pressure sensor has cross-sensitivities to the temperature of the measuring diaphragm and/or to the temperature gradients between the measuring diaphragm and other components of the pressure sensor,
wherein the capacitive converter has a membrane electrode with a temperature-dependent impedance, wherein the procedure comprises the following steps:
determination of a deformation-dependent capacity measured value of the capacitive converter; and **characterized in that** the procedure comprises the following additional steps:
determination of a temperature-dependent ohmic part of the impedance of the membrane electrode; and
determination of a temperature-compensated and/or temperature gradient-compensated pressure measured value depending on the capacity measured value and the ohmic part of the impedance of the membrane electrode.

## Revendications

1. Capteur de pression, comprenant :
un circuit d'exploitation ; et
une cellule de mesure de pression avec un contre-corps (1) ; une membrane de mesure déformable par une pression à mesurer, laquelle membrane est disposée sur le contre-corps (1) ; et un convertisseur capacitif, lequel présente au moins une électrode de membrane (7) disposée sur la membrane de mesure et au moins une électrode de contre-corps (8, 9) disposée sur le contre-corps (2), la capacité entre l'électrode de membrane (7) et l'électrode de contre-corps (8, 9) dépendant d'une déformation fonction de la pression, au moins l'électrode de membrane (7) présentant une impédance fonction de la température ;
capteur pour lequel le circuit d'exploitation est conçu de telle sorte à mesurer au moins une capacité entre l'au moins une électrode de contre-corps et l'au moins une électrode de membrane, **caractérisé en ce que** le circuit d'exploitation est conçu de telle sorte à mettre à disposition une valeur mesurée de pression en fonction de l'au moins capacité, ainsi qu'à déterminer la part ohmique de l'impédance de l'électrode de membrane, et
capteur pour lequel le circuit d'exploitation est conçu de telle sorte à effectuer une compensation de température et/ou une compensation de gradient de température en fonction de l'impédance de l'électrode de membrane, afin de mettre à disposition une valeur mesurée de pression compensée.

2. Capteur de pression selon la revendication 1, pour lequel le circuit d'exploitation est conçu de telle sorte à déterminer l'impédance de l'électrode de membrane au moyen d'une constante de temps d'un processus de charge et/ou de décharge de la capacité entre l'électrode de membrane et l'au moins une électrode de contre-corps.

3. Capteur de pression selon l'une des revendications précédentes, pour lequel le circuit d'exploitation constitue, conjointement avec la capacité entre l'électrode de membrane et l'au moins une électrode de contre-corps, un circuit oscillant, le circuit d'exploitation étant conçu de telle sorte à déterminer l'impédance de l'électrode de membrane au moyen d'une grandeur caractéristique du circuit oscillant, par exemple au moyen d'un angle de phase entre une tension de charge et un courant de charge dans le circuit oscillant, ou au moyen de la qualité ou de l'amortissement du circuit oscillant.

4. Capteur de pression selon l'une des revendications précédentes, pour lequel l'impédance de l'électrode de membrane dépend, outre de la température, également d'une déformation de la membrane de mesure, le circuit d'exploitation étant conçu de telle sorte à déterminer, en fonction de l'au moins une capacité entre l'électrode de membrane et l'au moins une électrode de contre-corps, l'influence de la déformation sur l'impédance de l'électrode de membrane et à procéder à une compensation lors de la détermination d'une valeur de température de la membrane de mesure, la valeur de température ainsi déterminée étant utilisée pour la réalisation d'une compensation de température et/ou d'une compensation de gradient de température lors de la détermination de la valeur mesurée de pression.

5. Capteur de pression selon l'une des revendications précédentes, pour lequel l'électrode de membrane présente un semi-conducteur, notamment un oxyde métallique, notamment un oxyde de titane ou un oxyde de titane dopé, par exemple un oxyde de titane dopé au niobium ou au tungstène.

6. Capteur de pression selon l'une des revendications précédentes, comprenant en outre un deuxième capteur de température, lequel capteur est disposé sur un côté arrière du contre-corps, situé à l'opposé de la membrane de mesure, le circuit d'exploitation étant conçu de telle sorte à réaliser une compensation de température ou une compensation de gradient de température en fonction de la température de la membrane de mesure déterminée au moyen de l'impédance de la membrane de mesure et au moyen de la valeur de température mesurée par le deuxième capteur de température.

7. Capteur de pression selon l'une des revendications précédentes, pour lequel la membrane de mesure est assemblée de façon étanche à la pression avec le contre-corps au moyen d'un joint électroconducteur périphérique, le joint présentant notamment une brasure active, et l'électrode de membrane étant reliée avec le joint de manière électroconductrice.

8. Capteur de pression selon l'une des revendications précédentes, pour lequel le convertisseur capacitif présente un condensateur différentiel avec une première électrode de contre-corps et une deuxième électrode de contre-corps, la première électrode de contre-corps étant entourée de façon annulaire par la deuxième électrode de contre-corps, et une première capacité entre la première électrode de contre-corps et l'électrode de membrane étant égale à une deuxième capacité entre la deuxième électrode de contre-corps et l'électrode de membrane lorsque la membrane de mesure et le contre-corps sont dans leur position de repos.

9. Procédé destiné à la détermination d'une valeur mesurée de pression au moyen d'un capteur de pression, notamment au moyen d'un capteur de pression selon l'une des revendications précédentes, lequel capteur de pression comporte un convertisseur capacitif destiné à la conversion d'une déformation fonction de la pression d'une membrane de mesure en un signal électrique, le capteur de pression présentant des sensibilités transversales à la température de la membrane de mesure et/ou aux gradients de température entre la membrane de mesure et d'autres composants du capteur de pression,
le convertisseur capacitif comportant une électrode de membrane avec une impédance dépendant de la température, le procédé comprenant les étapes suivantes :
détermination d'une valeur mesurée de capacité, dépendant de la déformation, du convertisseur capacitif ;
détermination d'une part ohmique, fonction de la température, de l'impédance de l'électrode de membrane ; et
détermination d'une valeur mesurée de pression compensée en température et/ou en gradient de température en fonction de la valeur mesurée de capacité et de la part ohmique de l'impédance de l'électrode de membrane.
